Europäisches Patentamt

European Patent Office

Office européen des brevets

(19)

(11) Veröffentlichungsnummer: **0 304 630**
**B1**

(12) **EUROPÄISCHE PATENTSCHRIFT**

(45) Veröffentlichungstag der Patentschrift: **23.01.91**

(51) Int. Cl.⁵: **B 01 D 33/27**

(21) Anmeldenummer: **88111822.8**

(22) Anmeldetag: **22.07.88**

(54) Schöpfrad.

(30) Priorität: **22.08.87 DE 3728098**

(43) Veröffentlichungstag der Anmeldung:
**01.03.89 Patentblatt 89/09**

(45) Bekanntmachung des Hinweises auf die
Patenterteilung:
**23.01.91 Patentblatt 91/04**

(84) Benannte Vertragsstaaten:
**AT BE CH DE FR LI NL**

(56) Entgegenhaltungen:
**DE-B-1 208 261**
**DE-B-1 266 251**
**DE-C- 211 475**
**US-A-2 717 083**

(73) Patentinhaber: **HÜLSKENS & CO.**
**Maassenstrasse 4**
**D-4230 Wesel (DE)**

(72) Erfinder: **Van der Kuil, Hans**
**Starenweg 20**
**D-4230 Wesel (DE)**

(74) Vertreter: **Cohausz & Florack Patentanwälte**
**Postfach 14 01 61 Schumannstrasse 97**
**D-4000 Düsseldorf 1 (DE)**

**Die Akte enthält technische Angaben, die nach dem Eingang der Anmeldung eingereicht wurden und die nicht in dieser Patentschrift enthalten sind.**

Courier Press, Leamington Spa, England.

**Beschreibung**

Die Erfindung betrifft ein Verfahren zum Entwässern von Schüttgut mit am Radumfang befestigten Bechern, deren Wände wasserdurchlässig sind und mit einer im oberen Bereich das Schöpfrad überdeckenden Haube, die am Rand des Schöpfrades abdichtend anliegt und in der Überdruck herrscht.

Um Sand und Kies in Schöpfrädern stärker zu entwässern ist es bekannt, unterhalb der Becher Sogkammern anzuordnen, in denen das darin befindliche Wasser aufgrund der Schwerkraft die Feuchtigkeit im Sand oder Kies nachzieht. Hierdurch wird die Restfeuchte von 20 bis 25% auf etwa 15% verringert. Eine weitere Reduzierung konnte durch Anlegen eines künstlichen Vakuums an einer gelochten Seitenwand des Schöpfrades erreicht werden. Dieses Verfahren führt aber zu hohem Verschleiß an den Dichtlippen und in der Vakuum-Pumpe. Auch kann es zu einer zu kurzen Wirkzeit des Vakuums und damit zu einer geringen Entwässerungsleistung führen.

Aus der DE-A 1 266 251 ist ein Entwässerungs-Schöpfrad der eingangs genannten Art bekannt, bei dem die oben überdeckende Haube Überdruck in die Entwässerungsbecher bzw. taschen leitet. Auch hier sind Abdichtungteile im Einlaufbereich erforderlich, die schnell verschleißen.

Aufgabe der Erfindung ist es, ein Verfahren der eingangs genannten Art so zu verbessern, daß bei geringem konstruktivem Aufwand und geringem Verschleiß ein optimaler Entwässerungsgrad erreicht wird.

Diese Aufgabe wird erfindungsgemäß dadurch gelöst, daß die Haube im Einlaufbereich bis unter die Wasseroberfläche reicht.

Durch die unter die Wasseroberfläche reichenden Ränder der Haube sind Abdichtungteile im Einlaufbereich nicht erforderlich, so daß eine einfache Konstruktion und geringer Verschleiß erzielt werden. Auch wird ein sehr frühes Einsetzen der Entwässerung erreicht.

Ein solches Schöpfrad erzielt extrem geringe Restfeuchten des Schüttgutes. Die Restfeuchte ist direkt abhängig von dem angelegten Überdruck und von der durchgesetzten Luftmenge, so daß sie sehr exakt steuerbar ist. Darüber hinaus sind bei diesem Schöpfrad nur kurze Saugkammern erforderlich, so daß die Konstruktion des Schöpfrades einfach ist.

Die Konstruktion der Haube ist besonders dann einfach und preiswert, wenn sie zwei seitliche, teilkreisförmig gebogene Profile aufweist, zwischen denen ein gebogenes Blech befestigt ist, das den entsprechenden Umfangsbereich des Schöpfrades überdeckt. Hierbei kann die Haube, insbesondere die gebogenen Profile von etwa radial befestigten, zu beiden Seiten des Schöpfrades angeordneten Streben gehalten sein.

Geringe Druckverluste werden dann erreicht, wenn die Haube im Auslaufbereich des Schöpfrades eine über die Schöpfradbreite sich erstreckende Dichtung aufweist. Hierbei kann die Dichtung in Richtung des Umfangs des Schöpfrades eine Länge aufweisen, die größer ist als die Breite eines Bechers. Eine Abdichtung wird dadurch geschaffen, daß an den beiden seitlichen Rändern der Haube teilkreisförmige Gummidichtungen befestigt sind, an deren Unterseite der kreisförmige Außenrand der Seitenwände entlanggleitet, wobei der in der Haube befindliche Überdruck die Gummidichtungen an die Seitenwände drückt. Um auch bei einem seitlichen Verschieben der Seitenwände des Schöpfrades eine sichere Abdichtung zu erreichen, wird vorgeschlagen, daß auf der Außenseite jeder Seitenwand im Abstand zu ihr ein koaxialer Ring befestigt ist, an dem die Gummidichtung aufliegt.

Ein Ausführungsbeispiel der Erfindung ist in Zeichnungen dargestellt und wird im folgenden näher beschrieben. Es zeigen.

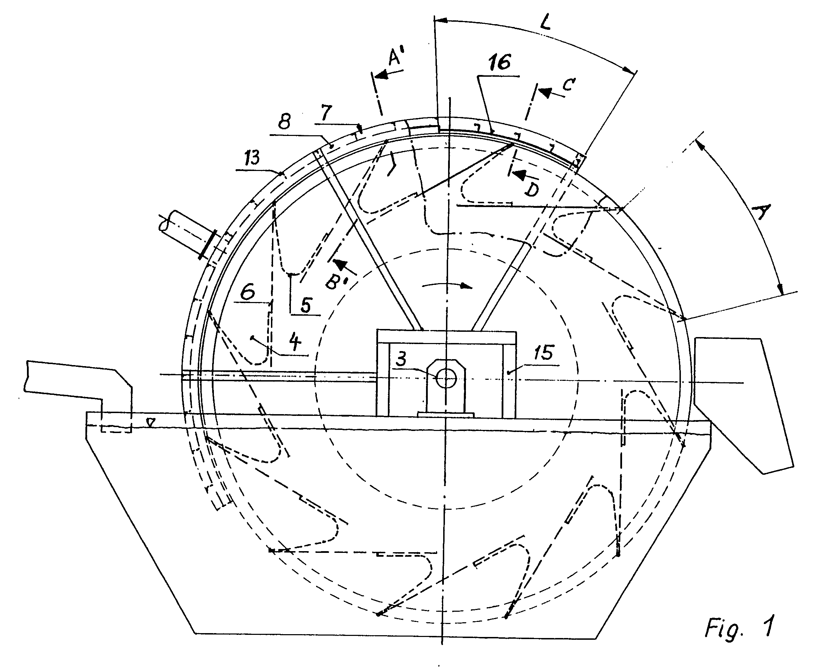

Fig. 1 eine Seitenansicht des Schöpfrades;

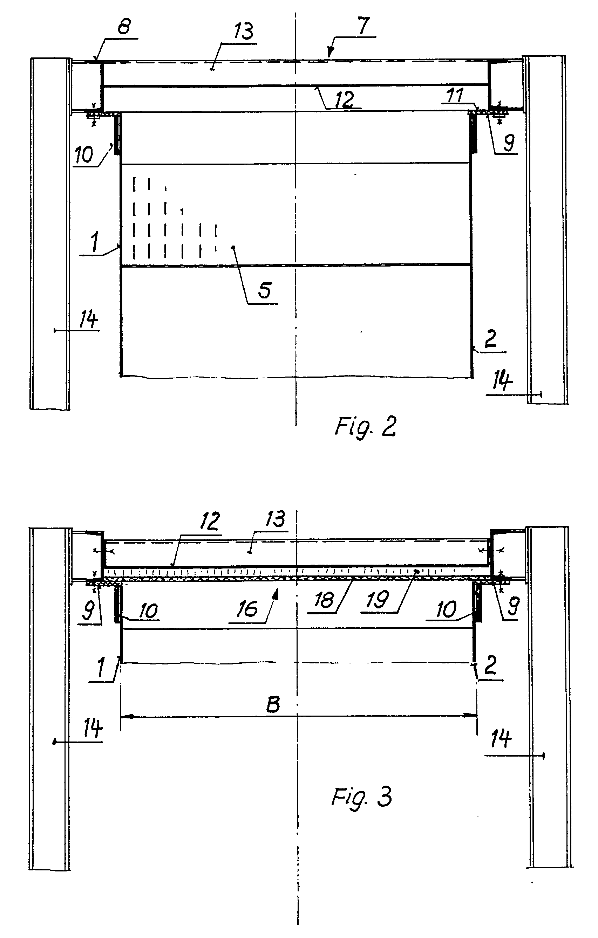

Fig. 2 einen Schnitt nach A'-B' in Figur 1;
Fig. 3 einen Schnitt nach C-D in Figur 1;

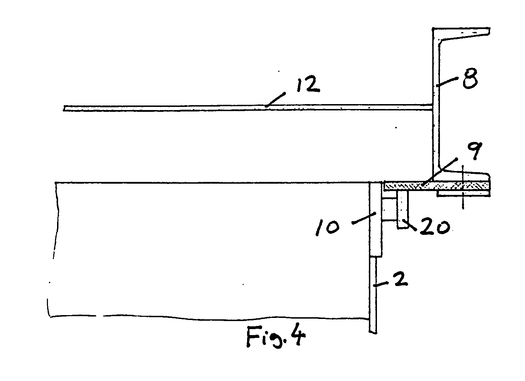

Fig. 4 eine Alternative zu Fig. 2 in vergrößertem Ausschnitt.

Das Schöpfrad weist zwei kreisrunde Seitenwände 1, 2 auf, die auf einer Welle 3 befestigt sind. Zwischen den Seitenwänden sind Becher 4 in regelmäßigen Abständen am Umfang befestigt. Jeder Becher besitzt als Entwässerungswandung eine gelochte Matte 5 aus Kunststoff. Die restliche Wandung jedes Bechers wird von einem Blech 6 gebildet. Die Matte 5 bildet auch den Boden des Bechers 4.

Auf der Oberseite des Schöpfrades ist über einen Teil seines Umfangs eine Haube 7 befestigt, die im Einlaufbereich bis unter die Wasseroberfläche reicht bei einem Überdruck von 0,1 bar 1 m unter die Wasseroberfläche. Die Haube 7 weist seitlich zwei gebogene U-Profile 8 auf, deren Innenradius etwa dem Radius der Seitenwände 1 entspricht. Damit ist über jeder Seitenwand 1, 2 ein gebogenes Profil 8 befestigt, das an der Unterseite jeweils eine Gummidichtung 9 trägt, die auf dem Umfang jeder Seitenwand 1 dichtend anliegt. Um die Seitenwände zu verstärken als auch die Dichtfläche zu vergrößern, ist außen an jeder Seitenwand im Randbereich ein Verstärkungsring 10 befestigt, an dem die frei vorstehende Dichtlippe 11 der Gummidichtung 9 zusätzlich anliegt.

Zwischen den Profilen 8 ist ein entsprechend gebogenes Blech 12 befestigt, das die Haube 7 nach außen ähnlich einem Deckel verschließt. Ferner sind zwischen den Profilen 8 außerhalb des Blechs 12 in regelmäßigen Abständen Queraussteifungen 13 in Form von Winkel-Profilen befestigt.

Die Profile 8 sind jeweils durch seitliche Streben 14 gehalten, die radial zur Mitte des Schöpfrades verlaufen und jeweils von einem Rahmen 15 getragen sind. Hierzu sind an den beiden Seiten des Schöpfrades Rahmen 15 im Bereich der Welle 3 angeordnet.

Im Auslaufbereich weist die Haube eine über die Schöpfradbreite B sich erstreckende Dichtung 16 auf. Diese Dichtung 16 besitzt in Richtung des Umfangs des Schöpfrades eine Länge L, die größer ist als die Breite eines Bechers bzw. als der Abstand A zweier äußerer Enden der Bleche 6.

Die Dichtung 16 ist von einer flexiblen Bahn 18 aus Kunststoff oder Gummi gebildet, die an ihrer Oberseite von einem elastischen Gummi 19 gehalten ist, das an der Unterseite des Bleches 12 befestigt ist. Hierdurch wird die Bahn 18 federnd nachgiebig gehalten, so daß eine Unrundheit des Schöpfrades aufgenommen werden kann und damit nicht zu kurzzeitigen Undichtigkeiten führt.

Innerhalb der Haube 7 und damit unterhalb des Bleches 12 liegt ein Luftüberdruck an, der in die Becher 4 hineinreicht und das im Schüttgut befindliche Wasser nach unten, d.h. zur Schöpfradmitte hin drückt. An den beiden seitlichen Rändern der Haube 7 sind teilkreisförmige Gummidichtungen 9 befestigt, an deren Unterseite der kreisförmige Außenrand der Seitenwände 1, 2 entlanggleitet, wobei der in der Haube 7 befindliche Überdruck die Gummidichtungen 9 an die Seitenwände drückt. Hierbei kann auf der Außenseite jeder Seitenwand 1, 2 im Abstand zu ihr ein koaxialer Ring 20 befestigt sein, an dem die Gummidichtung 9 aufliegt.

**Patentansprüche**

1. Verfahren zum Entwässern von Schüttgut durch ein Schöpfrad mit am Radumfang befestigten Bechern, deren Wände wasserdurchlässig sind, und mit einer im oberen Bereich das Schöpfrad überdeckenden Haube (7), die am Rand des Schöpfrades abdichtend anliegt und in der Überdruck herrscht, dadurch gekennzeichnet, daß die Haube (7) im Einlaufbereich bis unter die Wasseroberfläche reicht.

2. Schöpfrad zum Entwässern von Schüttgut durch ein Schöpfrad mit am Radumfang befestigten Bechern, deren Wände wasserdurchlässig sind, und mit einer im oberen Bereich das Schöpfrad überdeckenden Haube (7), die am Rand des Schöpfrades abdichtendanliegt zum Ausüben des Verfahrens nach Anspruch 1, dadurch gekennzeichnet, daß die Haube (7) zwei seitliche, teilkreisförmig gebogene Profile (8) aufweist, zwischen denen ein gebogenes Blech (12) befestigt ist, das den entsprechenden Umfangsbereich des Schöpfrades überdeckt.

3. Schöpfrad nach Anspruch 1, dadurch gekennzeichnet, daß die Haube (7), insbesondere die gebogenen Profile (8) von etwa radial befestigten, zu beiden Seiten des Schöpfrades angeordneten Streben (14) gehalten ist.

4. Schöpfrad nach Anspruch 2 oder 3, dadurch gekennzeichnet, daß die Haube (7) im Auslaufbereich des Schöpfrades eine über die Schöpfradbreite (B) sich erstreckende Dichtung (16) aufweist.

5. Schöpfrad nach Anspruch 4, dadurch gekennzeichnet, daß die Dichtung (16) in Richtung des Umfangs des Schöpfrades eine Länge (L) aufweist, die größer ist als die Breite (A) eines Bechers (4).

6. Schöpfrad nach Anspruch 4 oder 5, dadurch gekennzeichnet, daß die Dichtung (16) eine elastische, an dem Schöpfradumfang anliegende Bahn (18) aufweist, die auf ihrer Rückseite von einem nachgiebigen Material (19) gehalten ist.

7. Schöpfrad nach einem der Ansprüche 2 bis 6, dadurch gekennzeichnet, daß an den beiden seitlichen Rändern der Haube (7) teilkreisförmige Gummidichtungen (9) befestigt sind, an deren Unterseite der kreisförmige Außenrand der Seitenwände (1, 2) entlanggleitet, wobei der in der Haube (7) befindliche Überdruck die Gummidichtungen (9) an die Seitenwände drückt.

8. Schöpfrad nach Anspruch 7, dadurch gekennzeichnet, daß auf der Außenseite jeder Seitenwand (1, 2) im Abstand zu ihr ein koaxialer Ring (20) befestigt ist, an dem die Gummidichtung (9) aufliegt.

**Revendications**

1. Procédé pour assécher des matières pulvérulentes au moyen d'une roue à godets avec des godets fixés à la périphérie de la roue, dont les parois sont perméables à l'eau et avec une calotte (7) recouvrant la roue à godets dans la région supérieure, qui est serrée de manière étanche au bord de la roue à godets et dans laquelle règne une surpression, caractérisé en ce que la calotte (7) arrive jusqu'au-dessous de la surface de l'eau dans la région d'entrée.

2. Roue à godets pour assécher des matières pulvérulentes au moyen d'une roue à godets avec des godets fixés à la périphérie de la roue, dont les parois sont perméables à l'eau et avec une calotte recouvrant la roue à godets dans la région supérieure, qui est serrée de manière étanche au bord de la roue à godets pour la mise en oeuvre du procédé selon la revendication 1, caractérisé en ce que la calotte (7) comporte deux profilés incurvés latéraux (8) en forme d'arc de cercle entre lesquels est fixée une tôle incurvée (12) qui recouvre la portion périphérique correspondante de la roue à godets.

3. Roue à godets selon la revendication 2, caractérisée en ce que la calotte (7), en particulier les profilés incurvés (8) sont maintenus par des montants (14) disposés des deux côtés de la roue à godets et fixés sensiblement radialement.

4. Roue à godets selon la revendication 2 ou 3, caractérisée en ce que la calotte (7) présente, dans la région de sortie de la roue à godets, un joint d'étanchéité (16) s'étendant sur la largeur (B) de la roue à godets.

5. Roue à godets selon la revendication 4, caractérisée en ce que le joint d'étanchéité (16) présente une longueur (L) dans la direction de la périphérie de la roue à godets, qui est supérieure à la largeur (A) d'un godet (4).

6. Roue à godets selon la revendication 4 ou 5, caractérisée en ce que le joint d'étanchéité (16) présente une bande élastique (18) en appui sur la périphérie de la roue à godets et qui est maintenue sur sa face arrière (19) par un matériau flexible.

7. Roue à godets selon l'une des revendications 2 à 6, caractérisée en ce que des joints d'étanchéité en caoutchouc (9) en forme d'arc de cercle sont fixés sur les deux bords latéraux de la calotte (7) sur la face inférieure desquels glisse le bord extérieur circulaire des parois latérales (1, 2), la surpression régnant dans la calotte (7) comprimant les joints d'étanchéité en caoutchouc (9) contre les parois latérales.

8. Roue à godets selon la revendication 7, caractérisée en ce qu'une bague sur laquelle s'appuie le joint d'étanchéité en caoutchouc (9) est disposée sur la face extérieure de chaque paroi latérale (1, 2) coaxiale et écartée de celle-ci.

**Claims**

1. A method of dewatering bulk material by a bucket wheel having attached to the wheel periphery buckets whose walls are water-permeable, and a hood (7) containing excess pressure which covers the bucket wheel in its upper zone and bears in sealing-tight relationship against the bucket wheel edge, characterized in that the hood (7) extends to below the surface of the water in the inlet zone.

2. A method of dewatering bulk material by a bucket wheel having attached to the wheel periphery buckets whose walls are water-permeable, and a hood (7) which covers the bucket wheel in its upper zone and bears in sealing-tight relationship against the bucket wheel edge for the performance of the method according to claim 1, characterized in that the hood (7) has two lateral sections (8) which are bent in pitch circle shape and between which a bent metal plate (12) is attached which covers the corresponding peripheral zone of the bucket wheel.

3. A bucket wheel according to claim 1, characterized in that the hood (7), more particularly the bent sections (8), is retained by substantially radially attached struts (14) disposed on both sides of the bucket wheel.

4. A bucket wheel according to claims 2 or 3, characterized in that in the discharge zone of the bucket wheel the hood (7) has a seal (16) extending over the bucket wheel width (B).

5. A bucket wheel according to claim 4, characterized in that in the direction of the periphery of the bucket wheel the seal (16) has a length (L) which is greater than the width (A) of one bucket (4).

6. A bucket wheel according to claims 4 or 5, characterized in that the seal (16) has a resilient web (18) which bears against the bucket wheel periphery and is retained on its rear side by a yielding material (19).

7. A bucket wheel according to one of claims 2 to 6, characterized in that attached to the two lateral edges of the hood (7) are rubber seals (9) shaped as sectors of a circle along whose underside the circular outer edge of the side walls (1, 2) slides, the excess pressure in the hood (7) forcing the rubber seals (9) against the side walls.

8. A bucket wheel according to claim 7, characterized in that attached to the outside of each side wall (1, 2) at a distance therefrom is a coaxial ring (20) against which the rubber seal (9) bears.

Fig. 1

Fig. 2

Fig. 3

12

8

9

10

20

2

Fig. 4